# EUROPEAN PATENT SPECIFICATION

(11) **EP 3 081 370 B1**
(45) Date of publication and mention of the grant of the patent: **03.01.2018**
(21) Application number: 15400014.5
(22) Date of filing: 15.04.2015
(51) Int. Cl.: B29D 99/00

(54) **A COMPOSITE RADIUS FILLER FOR FILLING A VOID SPACE IN A SKIN-STIFFENER TRANSITION ASSEMBLY**
VERBUNDSTOFFRADIUSFÜLLER ZUM FÜLLEN EINES LEEREN RAUMS IN EINER HAUTVERSTEIFUNGSÜBERGANGSANORDNUNG
AGENT DE REMPLISSAGE DE RAYON COMPOSITE POUR REMPLIR UN ESPACE VIDE DANS UN ENSEMBLE DE TRANSITION DE RAIDISSEUR DE PEAU

(43) Date of publication of application: 19.10.2016
(73) Proprietor: AIRBUS HELICOPTERS DEUTSCHLAND GmbH, 86609 Donauwörth (DE)
(72) Inventor: Oefner, Walter, D-83624 Otterfing (DE); Otto, Hans, D-80336 München (DE)
(74) Representative: GPI & Associés

(56) References cited:
- WO-A2-2005/040017
- JP-A- H08 165 363
- US-A- 5 650 229

## Description

The present invention is related to a composite radius filler for filling a void space in a skin-stiffener transition assembly, comprising a plurality of rod-shaped roving bundles that are compressed into a predetermined cross sectional radius filler shape, said composite radius filler comprising the features of claim 1. The present invention is further related to a method of producing a rod-shaped roving bundle for a composite radius filler, said method comprising the features of claim 12.

Composite radius fillers, which are sometimes also referred to in the state of the art as "gusset fillers" or "noodles", are frequently used in complex carbon fiber reinforced polymer (CFRP) structures for filling void spaces that occur, for instance, at junctions of underlying preforms that build the CFRP structures. In particular, such void spaces occur where radii of curved preforms are attached or joined perpendicularly to composite skin panels or webs for creating e. g. reinforcing stiffeners, such as T-stiffeners, J-stiffeners or I-beams, which define the complex CFRP structures, which can also be referred to as skin-stiffener transition assemblies. The term "preform" generally designates a laminate of fiber plies that can be provided with a tackifier and/or binder and/or resin, and that is preformed into a comparatively complex shape required for creation of a given CFRP structure using a suitable preform tool.

More specifically, different preforms that are required for forming a complex CFRP structure are often prepared separately on an associated manufacturing machine and subsequently joined together to form the complex CFRP structure, ideally during a final curing process, but more often in successive process steps. If the complex CFRP structure comprises a void space e. g. at the junction of the preforms, a composite radius filler can be used to fill the void space. This composite radius filler is generally manufactured on a separate manufacturing machine and subsequently inserted into the void space.

However, it is very important that a given composite radius filler that is inserted into a void space comprises very sharp edges that are currently obtained using unidirectional fibers, i.e. fibers that are arranged in 0° direction with respect to a longitudinal extension of the composite radius filler respectively the void space. These very sharp edges are required in order to avoid occurrence of resin pockets or thickness issues in the void space between the composite radius filler and an underlying complex CFRP structure. Such resin pockets are particularly critical, as they may define weak spots where material failures of the underlying complex CFRP structure are likely to occur. Furthermore, it is important that the composite radius filler exhibits plain and waveless outer surfaces in order to allow for a required adhesion of the composite radius filler to surrounding parts in the void space, i. e. the surrounding preforms.

The document EP 2 727 711 A1 describes a laminated composite radius filler. The latter comprises two or more radius laminates, each comprising a laminate of stacked composite plies having a radial orientation that matches a radial orientation of the surrounding complex CFRP structure defining the void space, which is filled by the composite radius filler, in order to better fit the shape of the void space. The stacked composite plies are formed from a reinforcement material surrounded by and supported within a matrix material, such as a prepreg material. The reinforcement material may comprise high-strength fibers, such as glass or carbon fibers, graphite, aromatic polyamide fiber, fiberglass, or another suitable reinforcement material. The matrix material may comprise various polymer or resin materials, such as epoxy, polyester, vinyl ester resins, polyetheretherketone polymer (PEEK), polyetherketoneketone polymer (PEKK), bismaleimide, or another suitable matrix material. The term "prepreg" is meant to designate a woven or braided fabric or cloth-like tape material, e.g., fiberglass or carbon fibers, that have been impregnated with an uncured or partially cured resin, which is flexible enough to be formed into a desired shape, then "cured," e.g., by application of heat in an oven or an autoclave, to harden the resin into a strong, rigid, fiber-reinforced structure. The stacked composite plies may be in the form of a prepreg unidirectional tape, a unidirectional fiber tape, a CFRP tape, or another suitable tape; a CFRP fabric, a prepreg fabric, a woven fabric including a woven carbon fiber fabric, or another suitable fabric; a combination of a tape or a fabric thereof; or another suitable composite material.

The document US 6,689,448 also describes a laminated composite radius filler. The latter comprises a plurality of woven fabric reinforced plies that are cut by means of ultrasonic cutting in order to fill a void space in a complex CFRP structure. More specifically, the laminated composite radius filler comprises a unidirectional tip, an upper section consisting of 14 or 18 plies of thin tape with +- 45° orientation, a lower section consisting of 10 plies made from the same material and three additional plies.

However, use and manufacture of such laminated composite radius fillers involves a lot of manual operation. This is time consuming and expensive.

The document US 5,650,229 describes a unidirectional fiber composite radius filler. The latter comprises a shaped unidirectional fiber filler that consists of a plurality of unidirectional fibers, which can also be referred to as "all zero degree" fibers with respect to an underlying fiber orientation. These unidirectional or "all zero degree" fibers are shaped in an associated tool so as to exhibit a shape that conforms to a shape of a void space that is to be filled. Furthermore, a stabilizer or tackifier is intermingled with the unidirectional fibers in an amount sufficient to hold the fibers together in the shape of the void space, but below an amount which would inhibit resin infiltration between the unidirectional or "all zero degree" fibers during a subsequent resin injection, so that the fiber filler can be fully integrated into a given complex CFRP structure.

However, use of such a unidirectional or "all zero degree" fiber composite radius filler may result in high residual stresses weakening a corresponding final complex CFRP structure. Furthermore, a corresponding stiffness of such a unidirectional or "all zero degree" fiber composite radius filler is comparatively high and may result in a failure in bending mode. Moreover, the unidirectional or "all zero degree" fibers exhibit a comparatively low pull-off strength, as these fibers do not enhance the properties of the final complex CFRP structure when forces are applied perpendicularly to the "all zero degree" orientation of the fibers. This could easily be illustrated by means of a so-called "T-pull-test". It should be noted that a given likelihood of stress or fatigue cracking due to this comparatively low pull-off strength can at least be decreased by adding an external reinforcement. However, this would result in an undesired additional weight of the final complex CFRP structure.

The document US 2012/0308817 A1 describes a braided fiber composite radius filler. The latter holds multiple ends of a fiber together in a single piece with a braided structure, which is intended to make the composite radius filler as such easier to handle. More specifically, this braided fiber composite radius filler can be stabilized using a tackifier and is made of uniquely designed braids which confer a tailorable deformability in order to fit various void space profiles. This deformability is due to a comparatively high ratio of axial fibers over bias fibers that form the braid's envelope. Each braid as such is made of a plurality of individual fiber strands that are intertwined in a braided structure. The individual fiber strands can be made of organic or inorganic fibers including fibers made of polymer, carbon, graphite, glass, quartz, aramid, polybenzoxazole (PBO), polyethylene, inorganic oxide, carbide, ceramic, metal, or combinations thereof.

Unfortunately, such braided fiber composite radius fillers are not stable enough if they are made of dry fibers. If, however, they are stabilized using a tackifier or a binder and pressed in a predefined shape, they are stable enough but on the one hand no more sufficiently deformable to perfectly fit a given void space shape and on the other hand no more easily conformable to varying cross sections. Furthermore, corresponding edges of such braided fiber composite radius fillers are not sharp enough for avoiding occurrence of resin pockets or thickness issues in respective void spaces due to a resulting thickness of the braided fiber composite radius fillers "ply", even when they are pressed. Consequently, as the edges are not sharp enough, both residual stresses and resin pockets may appear. Moreover, the braided structure of each braid itself may also result in a formation of resin pockets, in particular if it is manufactured using infiltration processes. If such resin pockets occur at the base of the structure, this could once again lead to cracking.

The document US 6,231,941 describes a composite radius filler for a wind tunnel blade, which is formed in a resin transfer molding process. This composite radius filler is formed by a braided sleeve that surrounds a number of unidirectional tows. An underlying conformation and manufacturing process are provided such that also asymmetric composite radius fillers can be manufactured. More specifically, the composite radius filler is formed on mandrels presenting a shape that is identical to a required final shape of the composite radius filler.

However, while this wind tunnel blade composite radius filler may solve some of the above described problems, the sharpness issue with respect to the composite radius filler's edges still arises. Furthermore, the manufacturing process of the wind tunnel blade composite radius filler is very time consuming and, thus, expensive.

It is, therefore, an object of the present invention to provide a composite radius filler for filling a void space in a complex CFRP structure, i. e. a skin-stiffener transition assembly, that can be manufactured comparatively quickly in a cost- and timesaving automated process with predictable quality.

This object is solved by a composite radius filler with the features of claim 1.

More specifically, according to the invention a composite radius filler for filling a void space in a skin-stiffener transition assembly comprises a plurality of rod-shaped roving bundles that are compressed into a predetermined cross sectional radius filler shape. At least one rod-shaped roving bundle of the plurality of rod-shaped roving bundles is twisted around its longitudinal axis.

It should be noted that the term "composite" designates in the context of the present invention a material that is based on fiber reinforced polymers. As a preferred material carbon fibers and/or epoxy resins are used.

The main idea underlying the present invention is to create twists within fiber or roving bundles that compose the inventive composite radius filler. Advantageously, the twisted bundles can be produced continuously and assembled "in line" according to a desired final composite radius filler shape.

Preferably, a tackifier/binder and/or resin is provided on the surface of at least a predetermined number of rovings, and preferentially of each individual roving, in order to fix a resulting fiber or roving bundle in an associated twisted state, e. g. by heating the tackifier/binder/resin, if necessary. The tackifier/binder can e. g. be applied in powder form to a given roving and the resin can e. g. be applied using dip coating.

Advantageously, the inventive composite radius filler adequately meets challenges faced with design of composite assemblies, like skin-stiffener transition assemblies, under structural loading. In particular, it is easy to handle, very stable and has a homogeneous surface. Furthermore, the twisting of the bundles advantageously allows decreasing a resulting stiffness of the inventive composite radius filler. Thus, a potential risk of cracking at interfaces between the inventive composite radius filler and other parts of e. g. an associated skin-stiffener transition assembly and, accordingly, of the skin-stiffener transition assembly as a whole, can at least be reduced.

According to one aspect of the present invention, the inventive composite radius filler has a homogeneous structure and fiber arrangement, i. e. fiber volume content, over its entire length and geometry, as well as a plain surface with low waviness, which allows a better adhesion to other parts of the associated skin-stiffener transition assembly.

According to a preferred embodiment, the at least one rod-shaped roving bundle is composed of rovings that comprise carbon fibers. The at least one rod-shaped roving bundle is twisted around its longitudinal axis such that the carbon fibers exhibit a direction that is unequal to 0° along the longitudinal axis.

According to a further preferred embodiment, the at least one rod-shaped roving bundle is at least approximately rectilinear along the longitudinal axis.

According to a further preferred embodiment, the at least one rod-shaped roving bundle is composed of rovings, each being provided with at least one of a coating tackifier, binder and/or resin.

According to a further preferred embodiment, the binder is based on a thermoplastic and/or thermoset material.

According to a further preferred embodiment, the binder is epoxy-based and/or modified with a nanostructure.

According to a further preferred embodiment, the resin comprises an epoxy and/or thermoplastic material.

According to a further preferred embodiment, the at least one rod-shaped roving bundle is twisted at least 5 to 30 times around the longitudinal axis, preferably 15 to 25 times, per length meter of the at least one rod-shaped roving bundle.

It should be noted that dependent on a respective number of twists created in a given bundle, a corresponding stiffness of the composite radius filler is adjustable to an intended final use. Furthermore, as the stiffness of the given bundle is reduced through the twists applied thereto, improved properties in bending mode can be achieved.

According to a further preferred embodiment, the predetermined cross sectional radius filler shape comprises at least one of a half triangular shape, an asymmetric triangular shape, a symmetric triangular shape and a trapezoid-like shape.

According to a further preferred embodiment, the plurality of rod-shaped roving bundles comprises at least two rod-shaped roving bundles with differing diameters.

According to a further preferred embodiment, at least one fiber ply and/or at least one untwisted rod-shaped roving bundle is provided.

The present invention further provides a method, according to claim 12, of producing a rod-shaped roving bundle for a composite radius filler that is adapted for filling a void space in a skin-stiffener transition assembly. The method comprises joining a plurality of rovings to form a rod-shaped roving bundle, and twisting the rod-shaped roving bundle around an associated longitudinal axis in order to create a twisted rod-shaped roving bundle.

Advantageously, the inventive method and, consequently, the inventive manufacturing can be discontinuous or continuous and, thus, automatized. Such an automatized manufacturing is less time consuming and cheaper, especially when comparatively big output volumes are manufactured. Furthermore, it allows manufacturing with predictable, unchanging high product quality.

More specifically, the inventive method allows a continuous or discontinuous production of suitable twisted roving bundles that can be assembled "in line" according to a desired final composite radius filler shape. Furthermore, a variety of different shapes and geometries can be realized with a high flexibility in the geometries, as it is advantageously possible to vary an underlying number of rovings in each bundle, an underlying number of twists in each bundle, an underlying number of bundles composing a given composite radius filler, an underlying size/yarn count of each roving, and so on. Thus, using the same tools and partly the same materials, a lot of different geometries can be realized, even geometries with variable cross section shapes, wherein roving bundles are e. g. added locally to a given composite radius filler.

In particular, the inventive method is very easily adaptable to any variation in the shape of the composite radius filler. Any kind of fiber with any possible density can be used and combined to produce roving bundles of varying size/diameters. Using a tool of adapted geometry, any geometry of radius filler may be produced without changing an underlying production line.

If the inventive method is performed in a discontinuous manner, e. g. a first twisted roving bundle is prepared on a suitable production line and manually placed in a production tool that is provided for producing a given composite radius filler. Then a second twisted roving bundle is prepared and placed in the production tool and so on, until all twisted roving bundles required for production of the given composite radius filler are placed in the production tool, so that a predetermined form-shaping of the composite radius filler can be carried out.

If, however, the inventive method is performed in a continuous manner, the composite radius filler is entirely produced automatically and continuously. The underlying production principle would, nevertheless, be the same. Once each twisted roving bundle is prepared, it is automatically removed from the production line, e. g. by means of suction cups, and automatically arranged in the production tool. A given carrier on which the twisted roving bundle was prepared is then automatically transported back at the beginning of the production line. This transport would preferably be made automatically using a conveyor, but could also happen manually.

Alternatively, roving bundles are prepared, twisted and heated to be fixed in a corresponding twisted state by melting e. g. a deposited tackifier/binder and cooling it down, and stocked e. g. in a dedicated container. In a later step, a desired composite radius filler can be produced using different kinds of stocked twisted roving bundles depending on a final required geometry and radius filler properties.

According to a preferred embodiment, prior to joining the plurality of ravings to form a rod-shaped roving bundle, each roving is provided with at least one of a coating tackifier, binder and/or resin.

Preferably, the tackifier/binder is provided on the rovings during production. This is advantageous, if corresponding preforms are assembled in a later step.

According to a further preferred embodiment, the twisting of the rod-shaped roving bundle around the associated longitudinal axis comprises fixedly holding a first axial end of the rod-shaped roving bundle and rotating a second axial end thereof around the associated longitudinal axis 5 to 30 times, preferably 15 to 25 times, per length meter of the rod-shaped roving bundle.

According to a further preferred embodiment, the method of producing a rod-shaped roving bundle for a composite radius filler further comprises activating the coating tackifier, binder and/or resin for freezing the rod-shaped roving bundle in an associated twisted state.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a sectional view of a skin-stiffener transition assembly with a composite radius filler according to the present invention,
- Figure 2 shows perspective views of the composite radius filler of Figure 1,
- Figure 3 shows sectional views of exemplary cross section shapes of the composite radius filler of Figure 2, and
- Figure 4 shows schematic views of a production line for producing the composite radius filler of Figure 2 according to the present invention.

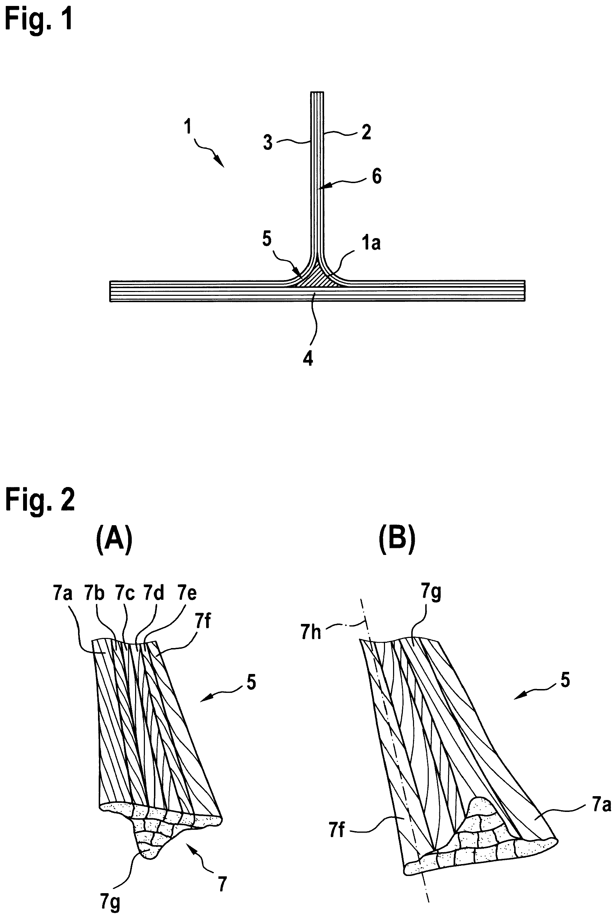

Figure 1 shows an exemplary skin-stiffener transition assembly 1 that illustratively comprises two essentially L-shaped preforms 2, 3, that are preferably made from fiber-reinforced fabric plies. The two essentially L-shaped preforms 2, 3 are preferentially attached to each other for creating a stiffener 6, such as e. g. a flange of an aircraft structure (not shown). Furthermore, the two essentially L-shaped preforms 2, 3 preferably adhere by gluing to a skin 4 of the skin-stiffener transition assembly 1.

According to one aspect of the present invention, a composite radius filler 5 is provided in a void space 1a existing in the skin-stiffener transition assembly 1 between the two essentially L-shaped preforms 2, 3 and the skin 4. This composite radius filler 5 acts preferentially against debonding or delamination of the skin-stiffener transition assembly 1.

The composite radius filler 5 is preferably used to create the preforms for resin-injected CFRP applied for skin-stiffener transition assemblies 1 of helicopter airframes, helicopter structural parts, airplane doors, airplane fuselage and cabin structures and/or non-aerospace applications. Preferentially, the two essentially L-shaped preforms 2, 3 and the skin 4 are made of the same material. Each of the two essentially L-shaped fiber-reinforced fabric preforms 2, 3 and the skin 4 are preferably conceived as a laminate ply stacking.

Figure 2 shows the composite radius filler 5 of Figure 1, which is adapted for filling the void space 1a in the skin-stiffener transition assembly 1 of Figure 1. Illustratively, the composite radius filler 5 has a symmetric triangular cross section shape with three comparatively sharp edges and is shown from two different viewing angles in parts (A) and (B) of Figure 2.

Preferably, the composite radius filler 5 comprises a plurality of elongated, rod-shaped roving bundles. For simplicity and clarity of the drawings, however, only seven roving bundles of this plurality of elongated, rod-shaped roving bundles are labelled with the reference signs 7a-7g.

According to one aspect of the present invention, the roving bundles 7a-7g define a stack of roving bundles 7 and are compressed into a predetermined cross sectional radius filler shape, which illustratively corresponds to an underlying shape of the void space 1a of Figure 1. Preferably, at least one and, preferentially, all roving bundles of the plurality of roving bundles 7a-7g are twisted around their longitudinal axes. For purposes of illustration and for simplicity and clarity of the drawings, only the roving bundle 7f is shown with its associated longitudinal axis 7h in Figure 2(B), by way of example.

It should be noted that the term "twisted" refers in the context of the present invention to a shape-forming that is obtained in the case of the elongated, rod-shaped roving bundle 7f by fixation of both axial ends thereof and rotation of one of the fixed axial ends around the associated longitudinal axis 7h. Thus, underlying fibers of the roving bundle 7f are helically or spirally wound around the associated longitudinal axis 7h.

It should further be noted that constitution and form-shaping of all roving bundles 7a-7e and 7g preferably correspond at least within predetermined manufacturing tolerances to those of the roving bundle 7f. Therefore, for brevity and conciseness, only the roving bundle 7f is described in more detail in the following, representative for all roving bundles 7a-7g of the stack of roving bundles 7.

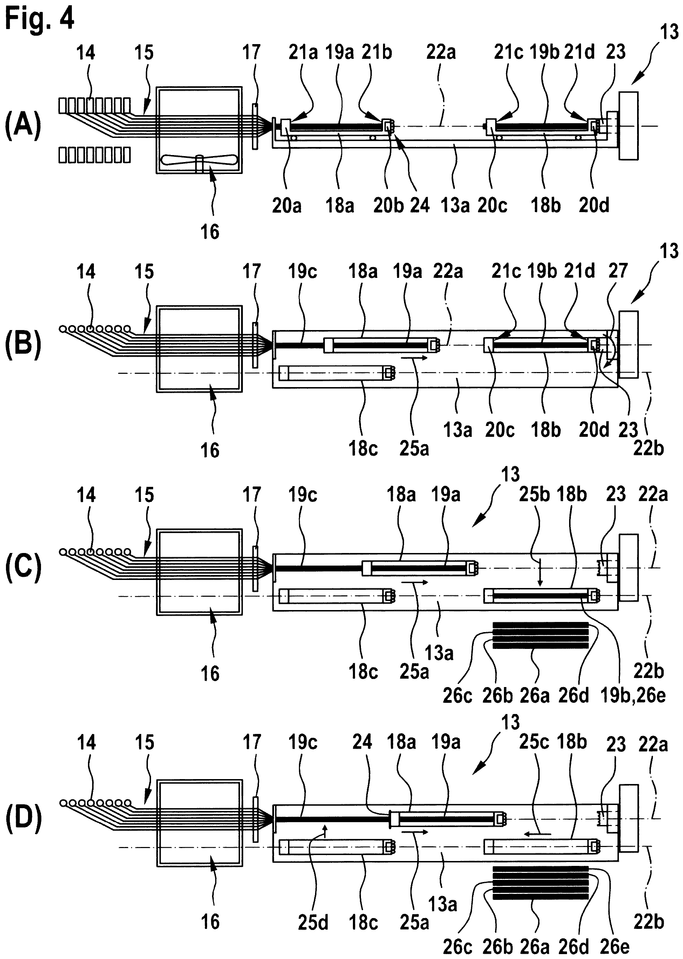

According to one aspect of the present invention, the roving bundle 7f is at least approximately rectilinear along its longitudinal axis 7h and composed of rovings (15 in Figure 4). Each roving is preferably provided with at least one of a coating tackifier, binder and/or resin.

The binder is preferably based on a thermoplastic and/or thermoset material. Preferentially, the binder is epoxy-based and/or modified with a nanostructure. The resin preferably comprises an epoxy and/or thermoplastic material.

According to one aspect of the present invention, the rovings (15 in Figure 4) that compose the roving bundle 7f comprise carbon fibers. The roving bundle 7f is preferentially twisted around its associated longitudinal axis 7h such that its carbon fibers exhibit a direction that is unequal to 0° along the longitudinal axis 7h. Preferably, the roving bundle 7f is twisted at least 5 to 30 times around its longitudinal axis 7h and, preferentially, 15 to 25 times per length meter of the roving bundle 7f.

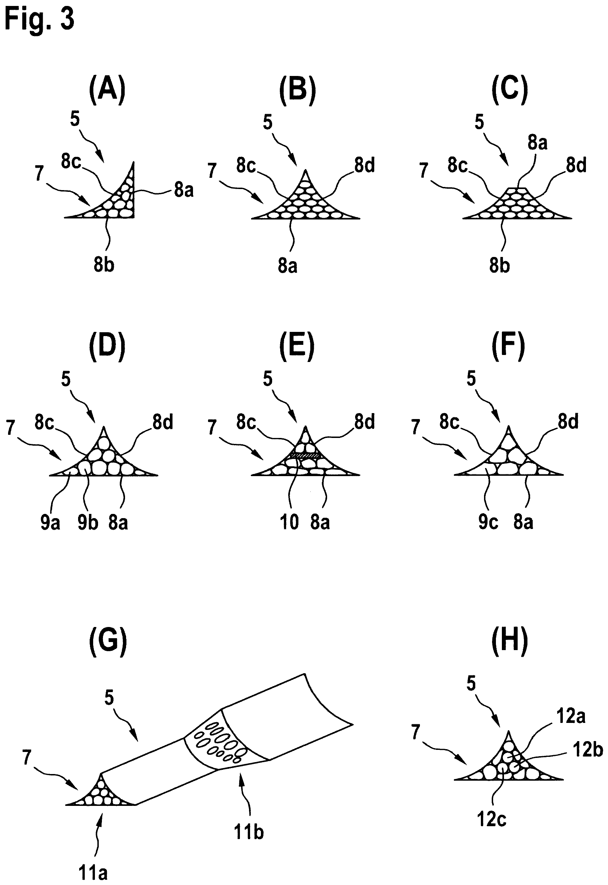

Figure 3 shows the composite radius filler 5 of Figure 2 with the stack of roving bundles 7 of Figure 2, illustrated by means of eight exemplary cross section shapes, which are labelled as parts (A) to (H) of Figure 3. These exemplary cross section shapes preferably comprise at least one of a half triangular shape, an asymmetric triangular shape, a symmetric triangular shape and a trapezoid-like shape. However, it should be noted that these cross section shapes as well as the exemplary symmetric triangular cross section shape of Figure 2 are merely illustrative and not for limiting the present invention thereto. Instead, various other shapes and geometries of the composite radius filler 5 are likewise contemplated.

More specifically, Figure 3(A) shows an exemplary right triangle cross section shape, which is also referred to as a half triangular cross section shape. According to this right triangle cross section shape, the composite radius filler 5 comprises two flat sides 8a, 8b that are preferably at least approximately perpendicular to each other, and one curved side 8c. This right triangle cross section shape illustratively comprises two sharp edges and one right-angled edge.

Figure 3(B) shows an exemplary asymmetric triangular cross section shape. According to this asymmetric triangular cross section shape, the composite radius filler 5 comprises only the single flat side 8a, the curved side 8c and another curved side 8d, which is illustratively longer than the curved side 8c for creating the asymmetry. This asymmetric triangular cross section shape illustratively comprises three sharp edges.

Figure 3(C) shows an exemplary trapezoid-like cross section shape. According to this trapezoid-like cross section shape, the composite radius filler 5 comprises the two flat sides 8a, 8b that are preferably at least approximately arranged in parallel to each other and connected via the two curved sides 8c, 8d. This trapezoid-like cross section shape illustratively comprises two sharp edges and two flat edges.

Figure 3(D) shows an exemplary symmetric triangular cross section shape, wherein the stack of roving bundles 7 comprises roving bundles of different size and, more particularly, of differing diameters depending on their respective positions in the composite radius filler 5. However, it should be noted that for simplicity and clarity of the drawings only two rod-shaped roving bundles with differing diameters are labelled with the reference signs 9a, 9b. According to this symmetric triangular cross section shape with roving bundles of different size, the composite radius filler 5 comprises only the single flat side 8a and the two curved sides 8c, 8d, which illustratively comprise an identical length, and comprises three sharp edges.

Figure 3(E) shows an exemplary symmetric triangular cross section shape with at least one fiber ply 10 that is inserted into the stack of roving bundles 7. By way of example, the at least one fiber ply 10 is bar- or lath-shaped and can be arranged between the roving bundles, i. e. respective bundle layers, as illustrated, or at an interface with respective surrounding elements, e. g. the two essentially L-shaped preforms 2, 3 and the skin 4 of the skin-stiffener transition assembly 1 of Figure 1. According to this symmetric triangular cross section shape, the composite radius filler 5 comprises only the single flat side 8a and the two curved sides 8c, 8d, which illustratively comprise an identical length, and comprises three sharp edges.

Figure 3(F) shows an exemplary symmetric triangular cross section shape, wherein the stack of roving bundles 7 comprises roving bundles of comparatively big size, respectively with a comparatively big diameter compared to the variants described above. However, it should be noted that for simplicity and clarity of the drawings only a single rod-shaped roving bundle with a comparatively big diameter is labelled with the reference sign 9c. According to this symmetric triangular cross section shape with roving bundles of comparatively big size, the composite radius filler 5 comprises only the single flat side 8a and the two curved sides 8c, 8d, which illustratively comprise an identical length, and comprises three sharp edges.

Figure 3(G) shows an exemplary symmetric triangular cross section shape with varying cross sections 11a, 11b, wherein the cross section shape as such varies and can be adjusted using bigger roving bundles and/or more or less roving bundles. Illustratively, the stack of roving bundles 7 comprises in the cross section 11b more roving bundles than in the cross section 11a.

Figure 3(H) shows an exemplary symmetric triangular cross section shape with at least one and illustratively three untwisted rod-shaped roving bundles 12a-12c that are inserted into the stack of roving bundles 7. Preferably, these untwisted rod-shaped roving bundles 12a-12c are composed of unidirectional fibers and arranged between the roving bundles, i. e. in a central position of the composite radius filler 5, for increasing an underlying stiffness of the latter. Such a cross section shape is particularly advantageous for well-defined applications requiring a high stiffness while avoiding occurrence of cracking at an interface with respective surrounding elements, e. g. the two essentially L-shaped preforms 2, 3 and the skin 4 of the skin-stiffener transition assembly 1 of Figure 1.

Figure 4 shows an exemplary production line 13 for producing twisted rod-shaped roving bundles, e. g. the roving bundles 7a-7g of Figure 2, for a composite radius filler according to the present invention, e. g. the composite radius filler 5 of Figure 1 to Figure 3. More specifically, for illustrating an exemplary inventive method of producing such twisted rod-shaped roving bundles, the production line 13 is illustrated in four separate exemplary production stages, which are labelled as parts (A) to (D) of Figure 4.

According to one aspect of the present invention, the production line 13 comprises a production platform 13a, which is preferably coupled to a spool tree 14 via an application chamber 16 and a guide tool 17. The production platform 13a is adapted for carrying at least one and preferably a plurality of bundle carriers 18a, 18b, 18c and comprises at least one rotation device 23 and at least one cutter 24. Preferentially, each bundle carrier 18a, 18b, 18c is provided with associated fixing points and heating means. Illustratively, the bundle carrier 18a comprises at its axial ends fixing points 20a, 20b and heating means 21a, 21b. Similarly, the bundle carrier 18b comprises at its axial ends fixing points 20c, 20d and heating means 21c, 21d.

It should be noted that the fixing points 20a, 20b, 20c, 20d define points, where also a corresponding heating by the heating means 21a, 21b, 21c, 21d and/or a corresponding rotation by means of the at least one rotation device 23 can be carried out. Therefore, the fixing points 20a, 20b, 20c, 20d may likewise be referred to as "heating points" and/or "rotating points".

Figure 4(A) illustrates an initial method step, wherein rovings 15 that are preferably made of carbon fibers and used as start material were placed on the spool tree 14 and are guided from the latter into the application chamber 16. These rovings 15 are preferably provided in the application chamber 16 with at least one of a coating tackifier, binder and/or resin. Therefore, the application chamber 16 is embodied as a closed chamber with air extraction, for safety issues.

More specifically, each roving 15 is preferably either provided with tackifier/binder in a powder state or with resin using dip coating or any suitable known or unknown process used to manufacture so called prepregs. However, it should be noted that alternatively commercially available fibers containing a tackifier/binder or commercially available prepreg fibers can be used, so that provision of the application chamber 16 can be omitted.

After their passage through the application chamber 16, the rovings 15 are guided via the guide tool 17 to the bundle carriers and joined thereon to form corresponding rod-shaped roving bundles. In Figure 4(A), the rovings 15 are joined on the bundle carrier 18a to form the roving bundle 19a. Therefore, the rovings 15 are fixedly attached to the fixing points 20a, 20b of the bundle carrier 18a, preferably without sagging.

According to one aspect of the present invention, a total of eight rovings 15 is assembled on the bundle carrier 18a for defining the roving bundle 19a. However, depending on an underlying application and a required final shape and geometry of the composite radius filler 5 of Figure 1 to Figure 3, more or less rovings 15 can be assembled into the roving bundle 19a.

By way of example, the bundle carrier 18b is shown with a roving bundle 19b, which is fixedly attached to the fixing points 20c, 20d. The bundle carrier 18b is illustratively arranged at a position on the production platform 13a, where the fixing point 20d is connected to the at least one rotation device 23. The roving bundles 19b, 19a preferably respectively define an associated longitudinal axis 22a.

Figure 4(B) illustrates a subsequent method step, wherein the roving bundle 19b is twisted around the associated longitudinal axis 22a in order to create a twisted rod-shaped roving bundle (26e in Figure 4(C) and (D)). Therefore, the fixing point 20d is rotated by means of the at least one rotation device 23 around the associated longitudinal axis 22a in a predetermined rotation direction 27, while the fixing point 20c is maintained stationary.

More specifically, twisting of the roving bundle 19b around the associated longitudinal axis 22a preferably comprises fixedly holding a first axial end of the roving bundle 19b by means of the fixing point 20c and rotating a second axial end thereof by means of the fixing point 20d around the associated longitudinal axis 22a a predetermined number of times such that the rovings 15 are no more in a 0° direction. This predetermined number of times preferably amounts to 5 to 30 times, preferentially 15 to 25 times, per length meter of the roving bundle 19b.

Preferably, after having rotated the second axial end the predetermined number of times and, thus, twisted the roving bundle 19b, the coating tackifier, binder and/or resin is activated for freezing the roving bundle 19b in an associated twisted state. The activation is preferably performed by heating the roving bundle 19b at both ends, i. e. using the heating means 21c, 21d. In this case, as carbon fibers are conductive, the heat would be transferred over the whole length of the roving bundle 19b such that the coating tackifier, binder and/or resin would melt and freeze the roving bundle 19b in the associated twisted state after having cooled down again. Alternatively, the roving bundle 19b can be heated entirely using any kind of heat source, e. g. an infrared heater.

According to one aspect of the present invention, the bundle carrier 18a is moved in direction of the bundle carrier 18b, i. e. towards the at least one rotation device 23, as indicated with an arrow 25a. This movement can be performed simultaneously with the twisting of the roving bundle 19b and is performed along the longitudinal axis 22a, which thus defines a movement path of the bundle carrier 18a.

As illustrated, by moving the bundle carrier 18a in the direction of the arrow 25a, a next roving bundle 19c is drawn onto the production platform 13a. This next roving bundle 19c can subsequently be attached fixedly to the bundle carrier 18c.

Figure 4(C) illustrates a further subsequent method step, wherein the bundle carrier 18b with the roving bundle 19b in twisted state, which is now referred to with the reference sign 26e, is moved sideward on the production platform 13a, as indicated by an arrow 25b, towards a position, where the twisted roving bundle 26e is located on a movement path 22b. At this position, the twisted roving bundle 26e can be removed from the bundle carrier 18b, preferably after having cooled down, and e. g. stacked with other twisted roving bundles 26a, 26b, 26c, 26d either for storage or in a form-shaping tool, where the composite radius filler 5 of Figure 1 to Figure 3 is preformed, e. g. by compressing the twisted roving bundles 26a-26e.

Figure 4(D) illustrates still a further subsequent method step, wherein the twisted roving bundle 26e is removed from the bundle carrier 18b, which is then moved along the movement path 22b in direction of the bundle carrier 18c, as indicated with an arrow 25c. The bundle carrier 18c is moved in a direction 25d towards the next roving bundle 19c, which can thus be arranged on the bundle carrier 18c and fixedly attached thereto.

Furthermore, the cutter 24 can be activated to cut off the roving bundle 19a, which is arranged on the bundle carrier 18a. The latter is then moved along the movement path 22a in the direction 25a towards the at least one rotation device 23, where the roving bundle 19a is processed similar to the roving bundle 19b, as described above.

It should be noted that all method steps described with reference to Figure 4(A) to (D) can be performed automatically and in a continuous manner, as described above, or alternatively at least in part manually and in a discontinuous manner. Moreover, further modifications are also within the common knowledge of the person skilled in the art and, thus, also considered as being part of the present invention.

### Reference List

- 1: skin-stiffener transition assembly
- 1: a void space
- 2: first L-shaped laminate of fiber plies
- 3: second L-shaped laminate of fiber plies
- 4: skin
- 5: composite radius filler
- 6: stiffener
- 7: stack of twisted roving bundles
- 7a to 7g: stacked twisted roving bundles
- 7h: longitudinal axis
- 8a, 8b: flat sides
- 8c, 8d: curved sides
- 9a, 9b, 9c: stacked twisted roving bundles with differing sizes
- 10: inserted fiber ply
- 11a, 11b: varying cross sections
- 12a, 12b, 12c: stiffer center bundles
- 13: twisted roving bundle production line
- 13a: production platform
- 14: spool tree
- 15: rovings
- 16: application chamber
- 17: guide tool
- 18a, 18b, 18c: bundle carriers
- 19a, 19b, 19c: roving bundles
- 20a, 20b, 20c, 20d: fixing points
- 21a, 21b, 21c, 21d: heating means
- 22a, 22b: bundle carrier movement paths
- 23: rotation device
- 24: cutter
- 25a, 25b, 25c, 25d: bundle carrier movement directions
- 26a to 26e: twisted roving bundles
- 27: rotation direction

## Claims

1. A composite radius filler (5) for filling a void space (1a) in a skin-stiffener transition assembly (1), comprising a plurality of rod-shaped roving bundles (7a-7g) that are compressed into a predetermined cross sectional radius filler shape, **characterized in that** at least one rod-shaped roving bundle (7f) of said plurality of rod-shaped roving bundles (7a-7g) is twisted around its longitudinal axis (7h).

2. The composite radius filler (5) according to claim 1,
**characterized in that** said at least one rod-shaped roving bundle (7f) is composed of rovings (15) that comprise carbon fibers, said at least one rod-shaped roving bundle (7f) being twisted around its longitudinal axis (7h) such that said carbon fibers exhibit a direction that is unequal to 0° along said longitudinal axis (7h).

3. The composite radius filler (5) according to claim 1,
**characterized in that** said at least one rod-shaped roving bundle (7f) is at least approximately rectilinear along said longitudinal axis (7h).

4. The composite radius filler (5) according to claim 1,
**characterized in that** said at least one rod-shaped roving bundle (7f) is composed of rovings (15), each being provided with at least one of a coating tackifier, binder and/or resin.

5. The composite radius filler (5) according to claim 4,
**characterized in that** said binder is based on a thermoplastic and/or thermoset material.

6. The composite radius filler (5) according to claim 5,
**characterized in that** said binder is epoxy-based and/or modified with a nanostructure.

7. The composite radius filler (5) according to claim 4,
**characterized in that** said resin comprises an epoxy and/or thermoplastic material.

8. The composite radius filler (5) according to claim 1,
**characterized in that** said at least one rod-shaped roving bundle (7f) is twisted at least 5 to 30 times around said longitudinal axis (7h), preferably 15 to 25 times, per length meter of said at least one rod-shaped roving bundle (7f).

9. The composite radius filler (5) according to claim 1,
**characterized in that** said predetermined cross sectional radius filler shape comprises at least one of a half triangular shape, an asymmetric triangular shape, a symmetric triangular shape and a trapezoid-like shape.

10. The composite radius filler (5) according to claim 1,
**characterized in that** said plurality of rod-shaped roving bundles (7a-7g) comprises at least two rod-shaped roving bundles (9a, 9b) with differing diameters.

11. The composite radius filler (5) according to claim 1,
**characterized in that** at least one fiber ply (10) and/or at least one untwisted rod-shaped roving bundle (12a-12c) is provided.

12. A method of producing a composite radius filler (5) that is adapted for filling a void space (1a) in a skin-stiffener transition assembly (1), said method comprising:
- Producing a plurality of rod-shaped roving bundles (7a-7g), each rod-shaped roving bundle (7f) being in turn made by:
• Joining a plurality of rovings (15) to form a rod-shaped roving bundle (19b),
• Twisting said rod-shaped roving bundle (19b) around an associated longitudinal axis (22a) in order to create a twisted rod-shaped roving bundle (7f);
- Compressing the plurality of rod-shaped roving bundles (7a-7g) into a predetermined cross sectional radius filler shape, thereby giving rise to the composite radius filler (5).

13. The method according to claim 12,
**characterized in that**, prior to joining said plurality of rovings (15) to form a rod-shaped roving bundle (19b), each roving (15) is provided with at least one of a coating tackifier, binder and/or resin.

14. The method according to claim 12,
**characterized in that** said twisting of said rod-shaped roving bundle (19b) around said associated longitudinal axis (22a) comprises fixedly holding a first axial end of said rod-shaped roving bundle (19b) and rotating a second axial end thereof around said associated longitudinal axis 5 to 30 times, preferably 15 to 25 times, per length meter of said rod-shaped roving bundle (19b).

15. The method according to claim 13 and 14,
**characterized by** further comprising activating said coating tackifier, binder and/or resin for freezing said rod-shaped roving bundle (19b) in an associated twisted state.

## Patentansprüche

1. Verbundstoffradiusfüller (5) zum Füllen eines leeren Raums (1a) in einer Außenhautversteifungs-Übergangsanordnung (1) mit einer Mehrzahl stabförmiger Roving-Bündel (7a-7g), die in eine vorbestimmte Radiusfüllerquerschnittsform gepresst sind, **dadurch gekennzeichnet, dass** mindestens eines der stabförmigen Roving-Bündel (7f) der Mehrzahl von stabförmigen Roving-Bündeln (7a-7g) um seine Längsachse (7h) verdrillt ist.

2. Verbundstoffradiusfüller (5) nach Anspruch 1,
**dadurch gekennzeichnet, dass** das mindestens eine stabförmige Roving-Bündel (7f) aus Rovings (15) zusammengesetzt ist, die Carbonfasern aufweisen, wobei das mindestens eine stabförmige Roving-Bündel (7f) um seine Längsachse (7h) so verdrillt ist, dass die Carbonfasern eine Richtung haben, die einen Winkel ungleich 0° gegenüber der Längsachse (7h) einnimmt.

3. Verbundstoffradiusfüller (5) nach Anspruch 1,
**dadurch gekennzeichnet, dass** das mindestens eine stabförmige Roving-Bündel (7f) zumindest näherungsweise gradlinig entlang seiner Längsachse (7h) verläuft.

4. Verbundstoffradiusfüller (5) nach Anspruch 1,
**dadurch gekennzeichnet, dass** das mindestens eine stabförmige Roving-Bündel (7f) aus Rovings zusammengesetzt ist, die jeweils mit mindestens einem von Beschichtungs-Klebrigmachern, Bindemittel oder Harz versehen ist.

5. Verbundstoffradiusfüller (5) nach Anspruch 4,
**dadurch gekennzeichnet, dass** das Bindemittel auf einem thermoplastischen und/oder duroplastischen Material basiert.

6. Verbundstoffradiusfüller (5) nach Anspruch 5,
**dadurch gekennzeichnet, dass** das Bindemittel auf Epoxidharz basiert und/oder mit einer Nanostruktur modifiziert ist.

7. Verbundstoffradiusfüller (5) nach Anspruch 4,
**dadurch gekennzeichnet, dass** das Harz ein Epoxidharz und/oder thermoplastisches Material aufweist.

8. Verbundstoffradiusfüller (5) nach Anspruch 1,
**dadurch gekennzeichnet, dass** das mindestens eine stabförmige Roving-Bündel (7f) mindestens 5- bis 30-mal um seine Längsachse (7a), vorzugsweise 15- bis 25-mal, pro Längenmeter des mindestens einen stabförmigen Roving-Bündels (7f), verdrillt ist.

9. Verbundstoffradiusfüller (5) nach Anspruch 1,
**dadurch gekennzeichnet, dass** die vorbestimmte Radiusfüllerquerschnittsform mindestens eine Form von einer Halbdreiecksform, einer asymmetrischen Dreiecksform, einer symmetrischen Dreiecksform und einer trapezoidartigen Form aufweist.

10. Verbundstoffradiusfüller (5) nach Anspruch 1,
**dadurch gekennzeichnet, dass** die Mehrzahl von stabförmigen Roving-Bündeln (7a-7g) mindestens zwei stabförmige Roving-Bündel (9a, 9b) mit unterschiedlichen Durchmessern aufweist.

11. Verbundstoffradiusfüller (5) nach Anspruch 1,
**dadurch gekennzeichnet, dass** mindestens eine Faserschicht (10) und/oder mindestens ein nicht-verdrilltes stabförmiges Roving-Bündel (12a-12c) vorgesehen ist.

12. Verfahren zur Herstellung eines Verbundstoffradiusfüllers (5), welcher geeignet ist, einen leeren Raum (1a) in einer Außenhautversteifungs-Übergangsanordnung (1) zu füllen, wobei das Verfahren aufweist:
- Herstellen einer Mehrzahl stabförmiger Roving-Bündel (7a-7g), wobei jedes stabförmige Roving-Bündel (7f) wiederum hergestellt wird durch:
• Zusammenfügen einer Mehrzahl von Rovings (15), um ein stabförmiges Roving-Bündel (19b) zu bilden,
• Verdrillen der stabförmigen Roving-Bündel (19b) um eine zugehörige Längsachse (22a), um ein verdrilltes stabförmiges Roving-Bündel (7f) zu erzeugen,
- Pressen der Mehrzahl stabförmiger Roving-Bündel (7a-7g) in eine vorbestimmte Radiusfüllerquerschnittsform, wodurch der Verbundstoffradiusfüller (5) erzeugt wird.

13. Verfahren nach Anspruch 12,
**dadurch gekennzeichnet, dass**, bevor die Mehrzahl von Rovings (15) verbunden wird, um ein stabförmiges Roving-Bündel (19b) zu bilden, jeder Roving (15) mit einem Beschichtungs-Klebrigmacher und/oder einem Bindemittel und/oder einem Harz versehen wird.

14. Verfahren nach Anspruch 12,
**dadurch gekennzeichnet, dass** das Verdrillen der stabförmigen Roving-Bündel (19b) um die zugehörige Längsachse (22a) eine feste Halterung eines ersten axialen Endes des stabförmigen Roving-Bündels (19b) und ein Drehen seines zweiten axialen Endes um die zugehörige Längsachse herum 5- bis 30-mal, vorzugsweise 15- bis 25-mal, pro Längenmeter des stabförmigen Roving-Bündels (19b) umfasst.

15. Verfahren nach Anspruch 13 und 14,
**dadurch gekennzeichnet, dass** es ferner das Aktivieren des Beschichtungs-Klebrigmachers, des Bindemittels und/oder des Harzes umfasst, um das stabförmige Roving-Bündel (19b) in einem zugehörigen verdrillten Zustand erstarren zu lassen.

## Revendications

1. Assemblage de remplissage de rayon en composite (5) pour combler un espace vide (1a) dans un ensemble de transition peau-raidisseur (1), comprenant plusieurs faisceaux filaire de tissage en forme de tige (7a-7g) qui sont compressés pour obtenir une forme de section prédéterminée de remplissage de rayon,
**caractérisé en ce que** au moins un faisceau filaire de tissage en forme de tige (7f) desdits plusieurs faisceaux filaire de tissage en forme de tige (7a-7g) est torsadé autour de son axe longitudinal (7h).

2. Assemblage de remplissage de rayon en composite (5) selon la revendication 1,
**caractérisé en ce que** ledit au moins un faisceau filaire de tissage en forme de tige (7f) est composé de stratifils (15) comprenant des fibres de carbone, ledit au moins un faisceau filaire de tissage en forme de tige (7f) étant torsadé autour de son axe longitudinal (7h) de sorte que lesdites fibres de carbone présentent une direction qui n'est pas égale à 0° le long dudit axe longitudinal (7h).

3. Assemblage de remplissage de rayon en composite (5) selon la revendication 1,
**caractérisé en ce que** ledit au moins un faisceau filaire de tissage en forme de tige (7f) est au moins approximativement rectiligne le long dudit axe longitudinal (7h).

4. Assemblage de remplissage de rayon en composite (5) selon la revendication 1,
**caractérisé en ce que** ledit au moins un faisceau filaire de tissage en forme de tige (7f) est composé de stratifils (15), chaque stratifil étant pourvu d'au moins un enrobage d'Assemblage adhésif, de liant et/ou de résine.

5. Assemblage de remplissage de rayon en composite (5) selon la revendication 4,
**caractérisé en ce que** ledit liant est fait de matériau thermoplastique et/ou thermodurcissable.

6. Assemblage de remplissage de rayon en composite (5) selon la revendication 5,
**caractérisé en ce que** ledit liant est fait à partir d'époxy et/ou modifié avec une nanostructure.

7. Assemblage de remplissage de rayon en composite (5) selon la revendication 4,
**caractérisé en ce que** ladite résine comprend un matériau époxy et/ou un matériau thermoplastique.

8. Assemblage de remplissage de rayon en composite (5) selon la revendication 1,
**caractérisé en ce que** ledit au moins un faisceau filaire de tissage en forme de tige (7f) est torsadé au moins 5 à 30 fois autour dudit axe longitudinal (7h), de préférence 15 à 25 fois par mètre en longueur dudit au moins un faisceau filaire de tissage en forme de tige (7f).

9. Assemblage de remplissage de rayon en composite (5) selon la revendication 1,
**caractérisé en ce que** ladite forme de section prédéterminée de remplissage de rayon comprend au moins une forme en demi-triangle, une forme triangulaire asymétrique, une forme triangulaire symétrique et une forme trapézoïdale.

10. Assemblage de remplissage de rayon en composite (5) selon la revendication 1,
**caractérisé en ce que** lesdits plusieurs faisceaux filaire de tissage en forme de tige (7a-7g) comprennent au moins deux faisceaux filaire de tissage en forme de tige (9a, 9b) de diamètres différents.

11. Assemblage de remplissage de rayon en composite (5) selon la revendication 1,
**caractérisé en ce que** au moins une couche de fibres (10) et/ou au moins un faisceau filaire de tissage en forme de tige non torsadé (12a-12c) est prévu.

12. Méthode de production d'Assemblage de remplissage de rayon en composite (5) qui est adaptée pour combler un espace vide (1a) dans un ensemble de transition peau-raidisseur (1), ladite méthode comprenant:
- La production de plusieurs faisceaux filaire de tissage en forme de tige (7a-7g), chaque faisceau filaire de tissage en forme de tige (7f) étant à son tour, fait à partir de:
• La jonction de plusieurs stratifils (15) formant un faisceau filaire de tissage en forme de tige (19b),
• La torsion dudit faisceau filaire de tissage en forme de tige (19b) autour de l'axe longitudinal associé (22a) pour créer un faisceau filaire de tissage en forme de tige torsadé (7f);
- La compression de plusieurs faisceaux filaire de tissage en forme de tige (7a-7g) dans une forme de section prédéterminée de remplissage de rayon, créant ainsi l'Assemblage de remplissage de rayon en composite (5).

13. Méthode selon la revendication 12,
**caractérisée en ce que**, préalablement à la jonction desdits plusieurs faisceaux filaire de tissage (15) pour former un faisceau filaire de tissage en forme de tige (19b), chaque stratifil (15) est pourvu d'au moins un enrobage d'Assemblage adhésif, liant et/ou de résine.

14. Méthode selon la revendication 12,
**caractérisée en ce que** ladite torsion dudit faisceau filaire de tissage en forme de tige (19b) autour dudit axe longitudinal associé (22a) comprend le fait de maintenir fixement une première extrémité axiale dudit faisceau filaire de tissage en forme de tige (19b) et le fait de donner 5 à 30 rotations à une seconde extrémité axiale autour dudit axe longitudinal associé, de préférence 15 à 25 rotations, par mètre en longueur dudit faisceau filaire de tissage en forme de tige (1 9b).

15. Méthode selon les revendications 13 et 14,
**caractérisée par** le fait de comprendre en outre l'activation de l'Assemblage adhésif, du liant et/ou de la résine pour figer ledit faisceau filaire de tissage en forme de tige (19b) dans un état de torsion associé.
